# EUROPEAN PATENT APPLICATION

(11) **EP 2 006 617 A2**
(43) Date of publication of application: **24.12.2008**
(21) Application number: 07741242.7
(22) Date of filing: 09.04.2007
(51) Int. Cl.: F25B 41/06

(54) **EXPANSION VALVE AND AIR CONDITIONER**

(30) Priority: 07.04.2006 JP 2006106975
(71) Applicant: Daikin Industries, Ltd., Osaka-shi, Osaka 530-8323 (JP)
(72) Inventor: YUKIMOTO, Tooru, Sakai-shi, Osaka 591-8511 (JP)
(74) Representative: HOFFMANN EITLE
(86) International application number: PCT/JP2007/057806
(87) International publication number: WO 2007/116991

(57) **Abstract**

An expansion valve capable of reducing noise due to acoustic resonance by allowing for adjustment of resonance characteristics of piping connected to a restricting portion and filled with a substantially liquid refrigerant, and an air conditioner using the same are provided. The expansion valve has a valve body 1, a restricting portion 18 formed inside the valve body 1, two piping connection portions 11, 12 communicating with the upstream side and the downstream side of the restricting portion 18, and at least one opening 30 that opens a refrigerant flow passage to outside of the valve body 1, the refrigerant flow passage extending from the piping connection portion 12 to which a piping 19 filled with a substantially liquid refrigerant is connected to the restricting portion 18. The valve body 1 is formed in such a manner that a resonance adjuster 31 having a resonance space and adjusting resonance characteristics of the piping 19 filled with a substantially liquid refrigerant can be attached to the outside so as to communicate with the opening 30.

## Description

### TECHNICAL FIELD

The present invention relates to an expansion valve which is used in a general refrigerating cycle, expands a high-temperature and high-pressure refrigerant to convert it into a low-temperature and low-pressure refrigerant, and to an air conditioner using the same.

### BACKGROUND ART

Conventionally, noise reduction in air conditioning systems has been demanded, and in particular, lowering noise in an expansion valve has been required. As a noise problem in an expansion valve, attention has mainly been given to noise in a case where a refrigerant flow that flows into the expansion valve becomes a gas-liquid two phase flow due to factors such as an increase in refrigerant flow resistance at a position upstream of the expansion valve and deficiency in performance or In this noise generation mechanism, refrigerant at different degrees of density irregularly passes through the interior of a valve body of the expansion valve. As a result, the pressure in the interior of the expansion valve fluctuates greatly, and the pressure fluctuations are propagated into a case forming the expansion valve. The valve body itself is vibrated by the pressure fluctuations of the expansion valve, whereupon the vibrations are transmitted to a rotor through a shaft and then the case is vibrated.

For such a problem, a configuration is proposed in Patent Document 1 in which a hollow space communicating with the interior of the valve body is formed within a housing of the valve body of the expansion valve. In this configuration, the level of noise of unpleasant frequency is lowered by causing the frequency characteristics of pressure fluctuations in the hollow space formed inside the housing to interfere with the frequency characteristics of pressure fluctuations when the pressure inside the valve body of the expansion valve is reduced. In Patent Document 2, there is proposed a configuration in which expansion chambers are respectively provided between two pieces of piping constituting an outlet and an inlet of the expansion valve and a restricting portion. These expansion valves reduce refrigerant passing noise by attenuating pressure pulsation of the refrigerant in stages when the refrigerant passes through the two expansion chambers, thereby having the expansion chambers serve as silencers. In Patent Document 3, there is proposed a configuration in which a noise absorbing chamber is provided within a component such as a valve body, a valve seat, a connecting pipe of the expansion valve. This configuration is used in a multi-air conditioner as an anti-noise measure for a case where a valve opening degree of an expansion valve of one part of air conditioners is adjusted in order to respond to a load change and then a refrigerant flow transitionally turns to be a gas-liquid two phase flow state at an inlet side of an expansion valve of an air conditioner in another room whereupon pressure pulsation is caused. The noise absorbing chamber is composed of an enclosed space and a straight pipe communicating with the space and having a predetermined length and a predetermined cross-sectional area. The chamber has a structure closely analogous to a Helmholtz resonator.
Patent Document 1: Japanese Laid-Open Patent Publication No. 10-160290
Patent Document 2: Japanese Laid-Open Patent Publication No. 11-325658
Patent Document 3: Japanese Laid-Open Patent Publication No. 8-135842

### DISCLOSURE OF THE INVENTION

However, a study by the present inventor discovered that noise in the expansion valve is generated not only in the aforementioned cases. Specifically, as for piping connected to a restricting portion of an expansion valve and filled with a substantially liquid refrigerant, refrigerant noise can be worsened due to acoustic resonance within the piping. Upstream side piping of the expansion valve in normal operation corresponds to the piping connected to the restricting portion and filled with a substantially liquid refrigerant. Further, there is also a case where downstream side piping as well as the upstream side piping of such an expansion valve corresponds to. In a heating operation of a multi-air conditioner, for example, upstream side piping and downstream side piping of an indoor expansion valve provided to an indoor unit correspond to the piping connected to the restricting portion and filled with a substantially liquid refrigerant.

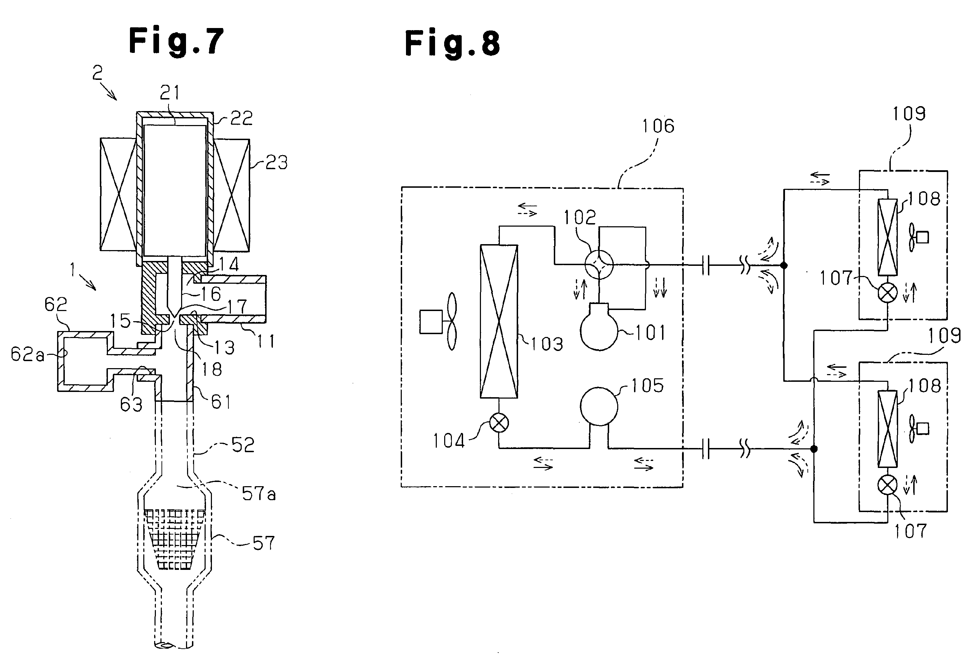

A description of which piping corresponds to the piping connected to the restricting portion and filled with a substantially liquid refrigerant in this multi-air conditioner will be given. Fig. 8 shows a refrigerant circuit in a general heat pump type multi-air conditioner. In this refrigerant circuit, a plurality (for example, two in Fig. 8) of indoor units 109, each housing an indoor expansion valve 107 and an indoor heat exchanger 108, are connected to a single outdoor unit 106 housing a compressor 101, a four-way switching valve 102, an outdoor heat exchanger 103, an outdoor expansion valve 104 and a liquid receiver 105. In a cooling operation of this air conditioner, a refrigerant circuit where the refrigerant circulates through a path of the compressor 101, the four-way switching valve 102, the outdoor heat exchanger 103, the outdoor expansion valve 104, the liquid receiver 105, the indoor expansion valve 107, the indoor heat exchanger 108, the four-way switching valve 102 and the compressor 101 is formed by switching the four-way switching valve 102, as shown by solid arrows in Fig. 8. Circuit sections of the indoor expansion valves 107 and the indoor heat exchangers 108 installed within the indoor units 109 are in a parallel connection. During the cooling operation, the refrigerant is controlled by the outdoor expansion valve 104 and the indoor expansion valve 107, the outdoor heat exchanger 103 serves as a condenser and the indoor heat exchangers 108.serve as evaporators. By having such a refrigerant circuit formed, room air is cooled and dehumidified by the indoor heat exchangers 108. In this refrigerant circuit, upstream side piping of the indoor expansion valve 107 corresponds to the aforementioned piping connected to the restricting portion and filled with a substantially liquid refrigerant when operation conditions are close to rated cooling operation conditions. Further, the present inventor discovered that there are occasions when refrigerant noise is worsened in the upstream side piping of the indoor expansion valve 107 in the operation of the refrigerant circuit due to acoustic resonance within the piping.

In heating operation, on the other hand, a refrigerant circuit where the refrigerant circulates through a path of the compressor 101, the four-way switching valve 102, the indoor heat exchanger 108, the indoor expansion valve 107, the liquid receiver 105, the outdoor expansion valve 104, the outdoor heat exchanger 103, the four-way switching valve 102 and the compressor 101 is formed by switching the four-way switching valve 102, as shown by dashed arrows in Fig. 8. In this case, too, circuit sections of the indoor heat exchangers 108 and the indoor expansion valves 107 housed in the indoor units 109 are in a parallel connection. During the heating operation, the refrigerant is controlled by the outdoor expansion valve 104 and the indoor expansion valves 107, the outdoor heat exchanger 103 serves as an evaporator and the indoor heat exchanger 108 serves as a condenser. By having such a refrigerant circuit formed, room air is heated by the indoor heat exchangers 108. In this refrigerant circuit, upstream side piping of the outdoor expansion valve 104 corresponds to the aforementioned piping connected to the restricting portion and filled with a substantially liquid refrigerant when operation conditions are close to rated heating operation conditions. Further, the present inventor discovered that there are occasions when refrigerant noise is worsened in the upstream side piping of the outdoor expansion valve 104 in the operation of this refrigerant circuit due to acoustic resonance within the piping.

When one of the indoor units 109 is stopped in such a refrigerant circuit, the indoor heat exchanger 108 of the stopped indoor unit 109 is in communication with a high pressure circuit. Therefore, if the operation stops for a long time in a state where the indoor expansion valve 107 positioned in an outlet of the indoor heat exchanger 108 is fully closed, a high pressure gaseous refrigerant is condensed and liquefied, and accumulates in the indoor heat exchanger 108 under suspension of the operation. Upon condensation, liquefaction and accumulation of the refrigerant in the indoor heat exchanger 108, the refrigerant amount within the refrigerant circuit runs short, which renders the operation at a regular pressure impossible and then leads to a possibility of constituting a hindrance to the heating operation. In order to avoid this, the indoor expansion valve 107 within the indoor unit 109 under suspension of the heating operation is not fully closed but opened slightly, thereby circulating a small amount of the liquid refrigerant constantly and controlling the retention of the liquid refrigerant. In this state, as well as the upstream side piping of the expansion valve, the downstream side piping is filled with the liquid refrigerant. Thus, the upstream side piping and the downstream side piping of the indoor expansion valve 107 in this refrigerant circuit correspond to the aforementioned piping connected to the restricting portion and filled with a substantially liquid refrigerant. Further, the present inventor discovered that there are occasions when refrigerant noise is worsened in the upstream side piping and the downstream side piping of the indoor expansion valve 107 in the operation of this refrigerant circuit due to acoustic resonance within the piping.

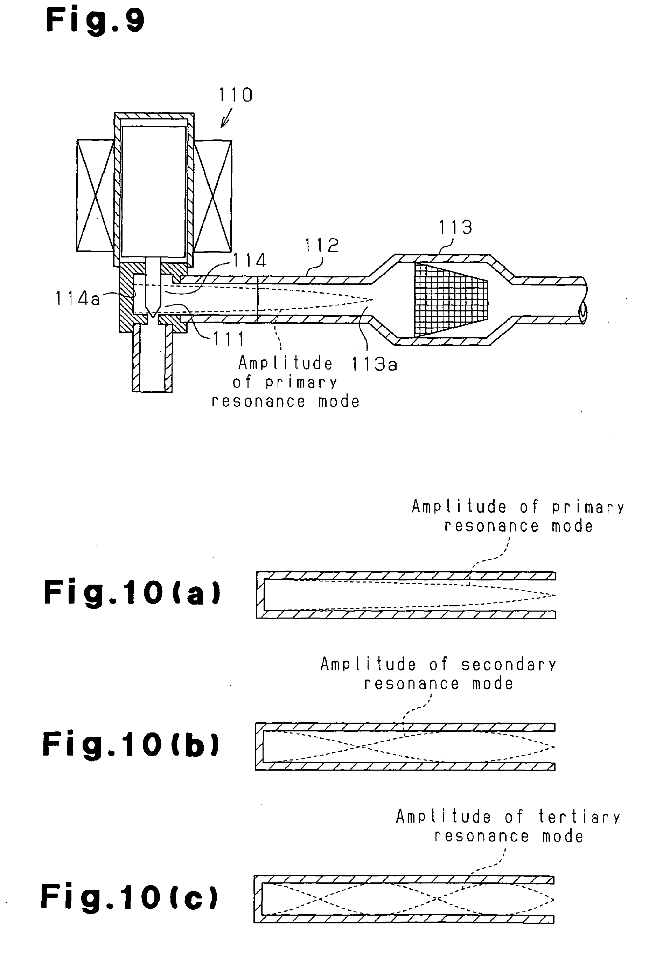

In such a piping connected to the restricting portion and filled with a substantially liquid refrigerant, a resonance space as shown in Fig. 9 is assumed. Fig. 9 is an arrangement example of piping 112 connected to a restricting portion 111 of an expansion valve 110 and filled with a substantially liquid refrigerant. A filter 113 is connected to the piping 112. In the resonance space of the piping in this case, a resonance mode may occur in which a side wall 114a of a valve chamber 114 of the expansion valve 110 serves as a closed end, and a large diameter portion 113a of the filter 113 in the piping 112 connected to a piping connecting portion serves as an open end. As shown in Fig. 9, the amplitude of the resonance mode is maximized at the closed end position (what is called an antinode), and the amplitude of the resonance mode becomes zero at the open end position (what is called a node). On the other hand, a noise source in the expansion valve 110 appears to result from turbulence of the refrigerant around the restricting portion 111. The restricting portion 111 is easily subjected to vibration since it exists in the antinode position of the above-described resonance mode. Therefore, the resonance mode is easily excited due to application of energy of the high speed refrigerant passing through the restricting portion 111.

Figs. 10(a) to 10(c) are schematic diagrams of resonance modes showing images of amplitudes of various sizes by dashed lines. In the piping 112 connected to the restricting portion 111 and filled with a substantially liquid refrigerant, every resonance mode, not only a primary mode shown in Fig. 9 or 10(a) but also a secondary mode and a tertiary mode shown in Figs. 10(b) and 10(c), is vibrated easily. The present inventor found that adjustment of resonance characteristics in a resonance space, in particular, adjustment of moving an antinode position of a resonance mode allows for a reduction of the amplitude level in acoustic resonance although the position of the restricting portion 111 cannot be changed. Further, it has been found that resonance characteristics are dependent on system design of air conditioners, from the fact that resonance modes in an actual device are determined by characteristics of every cross-sectional area varying portion of components connected to an expansion valve, for example, a filter, a silencer, a heat exchanger and by states of a circulating refrigerant, etc. In other words, the present inventor discovered that adjustment of resonance characteristics varies according to system design of air conditioners.

The foregoing conventional anti-noise measure of the expansion valve focuses on noise arising from pressure fluctuations due to gas-liquid two phase flow at the upstream side of the expansion valve, but not on noise arising from such an acoustic resonance. Further, an anti-noise measure focusing attention on noise arising from acoustic resonance has not been disclosed yet. The anti-noise measure described in the each aforementioned Patent Document originally does not focus attention on the acoustic resonance or consider adjustment of resonance characteristics although a silencer is provided in the vicinity of the restricting portion and thus the acoustic resonance can be affected. Accordingly, the fact that the adjustment of resonance characteristics is dependent on system design of air conditioners has not been suggested.

Accordingly, it is an objective of the present invention to provide an expansion valve capable of reducing noise arising from acoustic resonance by allowing for adjustment of resonance characteristics of piping that is connected to a restricting portion and filled with a substantially liquid refrigerant, and an air conditioner using the same.

In order to solve the foregoing problems, the first aspect of the present invention provides an expansion valve including a valve body, a restricting portion formed inside the valve body, two piping connection portions communicating with an upstream side and an downstream side of the restricting portion, and at least one opening that opens a refrigerant flow passage to the outside of the valve body, the refrigerant flow passage extending from the piping connection portion to which piping filled with a substantially liquid refrigerant is connected to the restricting portion. The valve body is formed in such a manner that a resonance adjuster having a resonance space and adjusting resonance characteristics of the piping filled with a substantially liquid refrigerant can be attached to the outside the valve body so as to communicate with the opening.

Implementing system design of an air conditioner by using the expansion valve thus configured allows a resonance adjuster corresponding to resonance characteristics of the piping connected to the restricting portion of the expansion valve in the air conditioner and filled with a substantially liquid refrigerant to be attached to the outside of the valve body of the expansion valve. As a result, an antinode position of a resonance mode is adjusted, and the amplitude level of resonance sound is lowered to reduce noise.

Preferably, the resonance adjuster is attached to the outside of the valve body so as to communicate with the opening. By this configuration, since the resonance adjuster is attached to the outside of the expansion valve, the resonance adjuster has flexibility in its attachment space, and corresponds to system design of an air conditioner can be furnished. Further, it is sufficient to change only the resonance adjuster, without changing valve bodies or valve actuators, in order to correspond to differences in resonance characteristics among systems of air conditioners, so that the expansion valves can be commonly used for different apparatuses.

Further, it is preferable that a plurality of the aforementioned openings are provided and a plurality of resonance adjusters are attached to the outside of the valve body so as to communicate with the openings. According to this configuration, not only is one resonance space formed as described above but also a plurality of resonance spaces may be formed in the piping connected to the restricting portion of the expansion valve and filled with a substantially liquid refrigerant. When a large diameter filter and a liquid receiver are connected in series in the piping, for example, a resonance space with the filter serving as an open end and a resonance space with the liquid receiver serving as an open end may be formed. In such a case, resonance characteristics of each resonance space can be adjusted by each resonance adjuster, since a plurality of resonance adjusters are attached. Preferably, the resonance adjuster is composed of a tubular container. Further, the resonance adjuster preferably has an enclosed space and a communication path communicating with the space.

Inside the resonance adjuster, a member that hardly reflects sound waves is preferably attached. According to this configuration, resonance sound is reduced by attaching the member that hardly reflects sound waves since the resonance sound is reflective. The member that hardly reflects the sound waves is preferably composed of a porous material.

According to a second aspect of the present invention, an air conditioner using the aforementioned expansion valve is provided. According to this configuration, an air conditioner exhibiting the aforementioned operation and effects is obtained.

### BRIEF DESCRIPTION OF THE DRAWINGS

Fig. 1 is a longitudinal cross-sectional view showing an expansion valve according to a first embodiment of the present invention;
Fig. 2 is a longitudinal cross-sectional view showing an expansion valve according to a second embodiment of the present invention;
Fig. 3 is a longitudinal cross-sectional view showing an expansion valve according to a third embodiment of the present invention;
Fig. 4 is a longitudinal cross-sectional view showing an expansion valve according to a fourth embodiment of the present invention;
Fig. 5 is a longitudinal cross-sectional view showing an expansion valve according to a fifth embodiment of the present invention;
Fig. 6 is a longitudinal cross-sectional view showing an expansion valve according to a sixth embodiment of the present invention;
Fig. 7 is a longitudinal cross-sectional view showing an expansion valve according to a seventh embodiment of the present invention;
Fig. 8 is a diagram showing a representative refrigerant circuit of a multi-air conditioner;
Fig. 9 is a diagram provided for explaining a resonance space of piping connected to a conventional expansion valve and filled with a liquid refrigerant; and
Figs. 10(a) to 10(c) are diagrams provided for explaining resonance modes in the piping.

### BEST MODE FOR CARRYING OUT THE INVENTION

Hereinafter, an expansion valve according to each embodiment of the present invention will be described with reference to the drawings. In the second to seventh embodiments, the same symbols are given to components that are the same as those in a first embodiment, and their descriptions will be omitted.

### (First Embodiment)

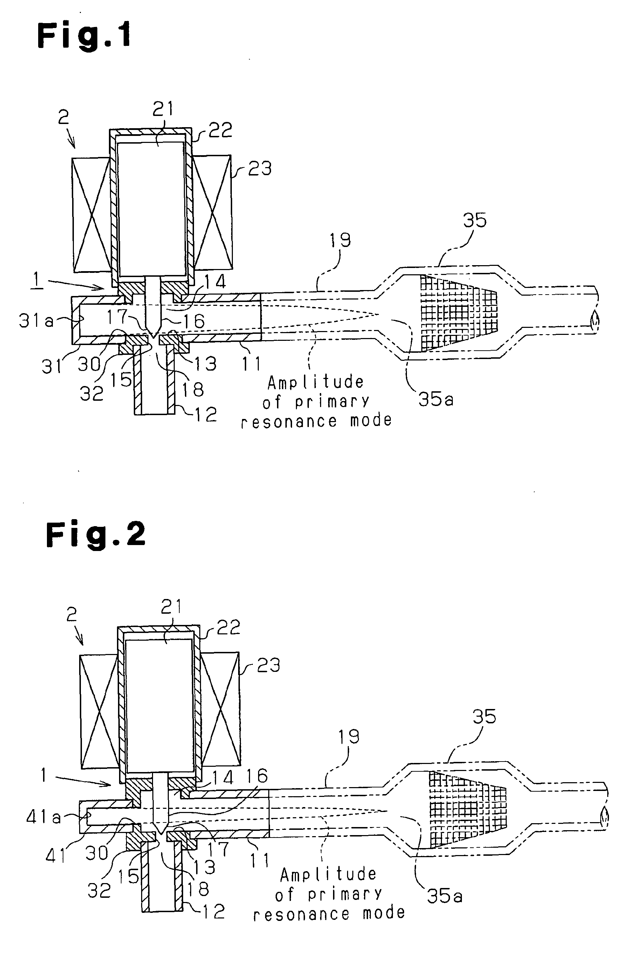

Hereinafter, an expansion valve according to a first embodiment of this invention is described with reference to Fig. 1. Fig. 1 is a longitudinal cross-sectional view of the expansion valve according to the first embodiment. The expansion valve according to the present embodiment is composed of a valve body 1 and a valve actuator 2 mounted on an upper part of the valve body 1 as shown in Fig. 1.

The valve body 1 has piping connection portions 11, 12 on a side surface and an under surface thereof, respectively. A refrigerant flow passage is formed between the piping connection portions 11, 12. The refrigerant flow passage is partitioned by a valve seat 13, and a valve chamber 14 is defined on an upper part of the valve seat 13. A valve hole 15 is formed in the valve seat 13, and a needle valve 17 formed at a distal end of a valve stem 16 is configured so as to be move from above relative to the valve hole 15. The needle valve 17 and the valve seat 13 constitute a restricting portion 18. The piping connection portions 11, 12 are configured by joint piping in order to facilitate a connection of piping 19 connected to the expansion valve.

The valve actuator 2 is a drive portion for vertically moving the valve stem 16, and includes, for example, a rotor 21 coupled to the valve stem 16, a rotor case 22 surrounding the rotor 21, and a stator 23 attached to the outside of the rotor case 22. The above-mentioned configuration is a conventionally publicly known general configuration as an expansion valve.

In such a configuration, the expansion valve according to the present embodiment is provided with an opening 30 that is positioned lateral to the valve chamber 14 of the valve body 1 and also opposed to the piping connection portion 11 and opens the valve chamber 14 to the outside. The opening 30 is formed into a circular hole with a diameter substantially as large as an inner diameter of the piping 19 connected to the piping connection portion 11. Outside the valve body 1, a socket portion 32 is formed in order to allow a tubular resonance adjuster 31 with the same diameter as the piping 19 to be attached.

The resonance adjuster 31 is composed of a tubular container with substantially the same diameter as the piping 19. The container has one end opened and the other end closed. The resonance adjuster 31 composed of this tubular container is attached by brazing to the socket portion 32 concentrically with the opening 30.

When the resonance adjuster 31 is attached to the outside of the valve body 1, an open end of a resonance space corresponds to a large diameter portion 35a of a filter 35 attached to the piping 19, and a closed end of the resonance space corresponds to a closed end 31a of the resonance adjuster 31 attached to the outside of the valve body 1, as shown in Fig. 1. Thus, the resonance space is formed to project outside the valve chamber 14. Consequently, as the primary resonance mode shown by the dashed line in Fig. 1, its antinode and node are adjusted. When the resonance characteristics are adjusted in such a manner, vibrating energy generated in the restricting portion 18 is applied to a place displaced from the antinode of the resonance mode.

It is required that the attachment position of the resonance adjuster 31 communicating with the opening 30 be upstream of the restricting portion and preferably as near as possible to the restricting portion 18, as regards the resonance space of the piping 19. Since these kinds of resonance adjusters have an energy absorption effect, too, it is preferable that the resonance adjusters be positioned near the energy generating source. Thus, the resonance adjuster 31 is provided on a side surface of the valve chamber 14. However, the resonance adjuster 31 does not necessarily need to be positioned opposed to the piping connection portion 11, but may be positioned intersecting an axis of the piping connection portion 11 at a predetermined angle.

The expansion valve of the first embodiment is configured as described above, and exemplified as embodiments of an expansion valve to which a resonance adjuster 31 is attached and an expansion valve to which no resonance adjuster 31 is attached. According to the thus configured expansion valve in a state where the resonance adjuster 31 is not attached, a resonance adjuster 31 corresponding to resonance characteristics of the resonance space composed of the piping 19 connected to the restricting portion 18 of the expansion valve and filled with a substantially liquid refrigerant can be attached to the outside of the valve body 1 of the expansion valve. As a result, an antinode position of the resonance mode can be adjusted, and the amplitude level of resonance sound is lowered to reduce noise. Further, in the case of the expansion valve to which no resonance adjuster 31 is attached as described above, system designers of air conditioners can select a resonance adjuster 31 with optimum characteristics decided on their own, and attach it to the expansion valve.

In the case of the expansion valve in a state where the resonance adjuster 31 is attached, an expansion valve to which a resonance adjuster 31 corresponding to resonance characteristics of the resonance space of the piping 19 is attached is prepared in advance at the time of system design of air conditioners. In this manner, an expansion valve capable of adjusting resonance characteristics is adopted in a system of an air conditioner, whereupon an antinode position of a resonance mode can be adjusted and the amplitude level of resonance sound is lowered to reduce noise.

### (Second Embodiment)

In an expansion valve according to a second embodiment, a resonance adjuster 41 with a smaller diameter than the piping 19 is used instead of the resonance adjuster 31 according to the first embodiment, as shown in Fig. 2. The closed end of the resonance space in this case corresponds to a closed end 41a of the resonance adjuster 41 attached to the outside of the valve body 1. A basic concept of the resonance adjuster 41 according to the second embodiment is identical to that of the resonance adjuster 31 of the first embodiment. Adjustment of the length and the diameter of the resonance adjuster 41 allows for adjustment of resonance characteristics, and the amplitude level of noise due to acoustic resonance id lowered to reduce resonance sound.

### (Third Embodiment)

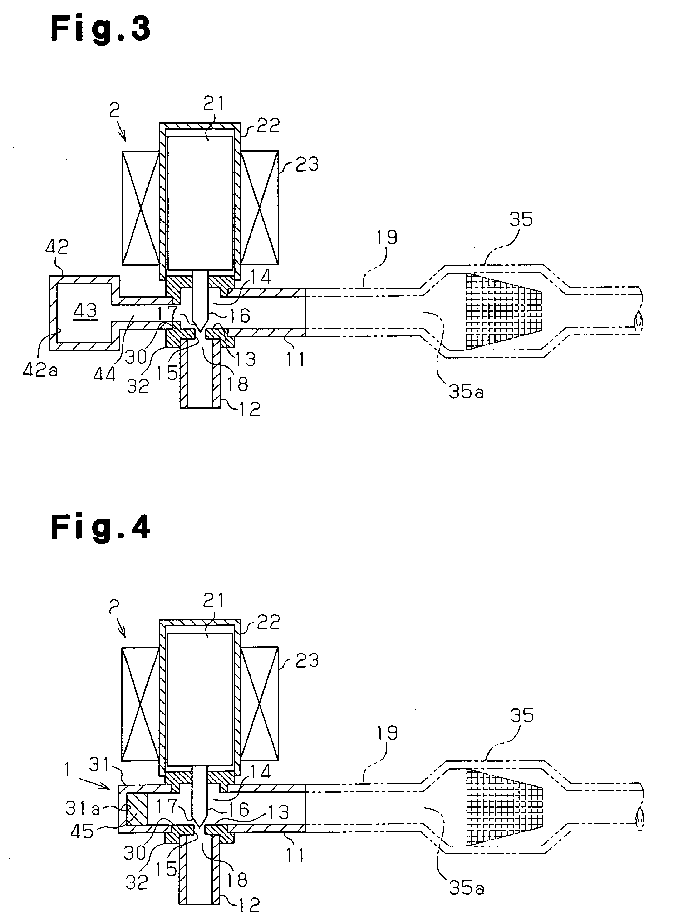

A resonance adjuster 42 according to a third embodiment includes an enclosed space (noise absorbing chamber) 43 and a communication path 44 communicating with the space 43 and having a predetermined length and a predetermined cross-sectional area, as shown in Fig. 3. The resonance adjuster 42 is coupled laterally to the valve chamber 14, whereby the closed end of the resonance space corresponds to a closed end 42a of the resonance adjuster 42 attached to the outside of the valve body 1. The expansion valve according to the third embodiment can adjust resonance characteristics of the piping 19 and lower a noise level of low frequencies by being attached with the resonance adjuster 42 having the foregoing configuration. Therefore, the amplitude level of resonance sound is further reduced.

### (Fourth Embodiment)

An expansion valve according to a fourth embodiment has a member 45 that hardly reflects sound waves inside the resonance adjuster 31 according to the first embodiment as shown in Fig. 4. A material for the member 45 that hardly reflects sound waves includes porous materials such as a metal fiber and sintered alloy. The attachment of the member 45 that hardly reflects sound waves inside the resonance adjuster 31 allows for reduction of reflected sound of resonance sound, and thus the amplitude level of the resonance sound is lowered to further reduce noise.

### (Fifth Embodiment)

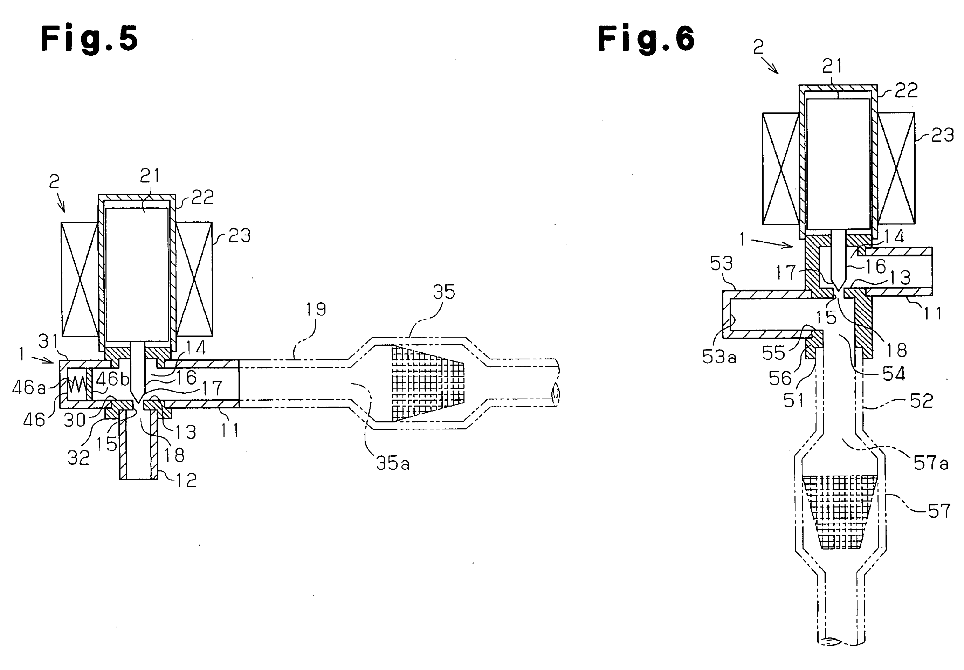

In an expansion valve according to a fifth embodiment, a member 46 that hardly reflects sound waves is attached inside the resonance adjuster 31 according to the first embodiment in the same manner as the fourth embodiment, as shown in Fig. 5. The member 46 that hardly reflects sound waves in the fifth embodiment is composed of a member displacing a plate member 46b that is elastically supported by a spring 46a in response to pressure fluctuations. In this case, too, reflected sound of resonance sound is absorbed, so that the amplitude level of the resonance sound is lowered to further reduce noise, in the same manner as the fourth embodiment.

### (Sixth Embodiment)

The first to fifth embodiments relate to resonance adjusters adjusting resonance characteristics of the piping 19 connected to a side surface of the valve chamber 14. However, a sixth embodiment relates to adjustment of a resonance mode of piping 52 connected to a piping connection portion 51 on the lower side of the valve body 1, as shown in Fig. 6. Joint piping as in the first embodiment is not provided to the piping connection portion 51 on the lower side of the valve body 1 in the sixth embodiment.

In the sixth embodiment, there is no portion to which a resonance adjuster 53 can be attached on a surface opposed to the piping connection portion 51 as in the first to fifth embodiments. Further, no valve chamber 14 between the restricting portion 18 and the piping connection portion 51 is provided. Accordingly, a space portion 54 is provided at a lower part of the valve seat 13, and an opening 55 that opens the space portion 54 to the outside is provided laterally to the space portion 54. Further, a socket portion 56 is formed outside the opening 55. The resonance adjuster 53 is attached by brazing concentrically with the socket portion 56.

A resonance space of the piping 52 in this case has a bent form. If a large diameter filter 57 is attached, for example, a node of a resonance mode corresponds to the position of a large diameter portion 57a of the filter 57. The closed end of the resonance mode corresponds to a closed end 53a of the resonance adjuster 53 attached to the outside of the valve body 1. The adjustment of resonance characteristics in this manner results in applying vibrating energy generated in the restricting portion 18 to a place displaced from an antinode of the resonance mode. As a result, the amplitude of resonance sound is decreased and noise is reduced.

### (Seventh Embodiment)

In an expansion valve according to a seventh embodiment, a resonance adjuster 62 is provided to a piping connection portion 61 on the lower side of the valve body 1 in the same manner as the sixth embodiment. More specifically, as shown in Fig. 7, such joint piping as the first embodiment is provided to the piping connection portion 61. An opening 63 that opens a space within the piping to the outside is provided to the joint piping of the piping connection portion 61. A hole flanging portion bulge from the joint piping in the opening 63. The resonance adjuster 62 with the same configuration as the resonance adjuster 42 according to the third embodiment is arranged concentrically with the opening 63, and then attached by brazing.

In the seventh embodiment thus configured, a resonance space and a resonance mode of the piping 52 are the same as those of the sixth embodiment, and the same adjustment of resonance characteristics as in the sixth embodiment is made. The closed end of the resonance mode corresponds to a closed end 62a of the resonance adjuster 62 attached to the outside of the valve body 1. Since the resonance adjuster 62 is attached, the expansion valve according to the seventh embodiment adjusts resonance characteristics in the same manner as the expansion valve according to the sixth embodiment and lower the noise level of low frequencies.

### (Modifications)

(1) In each of the embodiments, the attachment of the resonance adjuster 31, 41, 42, 53, 62 to the opening 30, 55, 63 is performed by providing the socket portion 32, 56 or the hole flanging portion to the opening 30, 55, 63 and then being brazed with the socket portion 32, 56 or the hole flanging portion. However, the resonance adjuster 31, 41, 42, 53, 62 may be attached by welding instead of brazing. Further, if a thermal effect on the valve body 1 and the valve actuator 2 due to brazing and welding of the resonance adjuster 31, 41, 42, 53, 62 constitutes a problem, a short piping may be provided to the opening 30, 55, 63 in the same manner that the joint piping is provided to the piping connection portion 11, 12, 51, 61. In that case, if an expansion valve to which no resonance adjuster 31, 41, 42, 53, 62 is attached is regarded as a finished product, an expansion valve provided with the short piping to the opening 30, 55, 63 may be shipped. The attachment of the resonance adjuster 31, 41, 42, 53, 62 to the opening 30, 55, 63 may be performed by a tapered thread instead of the aforementioned brazing and welding as long as no leakage occurs and the strength is maintained.
(2) In each of the embodiments, only one opening 30, 55 is clearly shown. However, a plurality of openings 30, 55 may be provided and a plurality of resonance adjusters 31, 41, 42, 53 communicating with respective openings 30, 55 may be attached to the outside of the valve body 1. To the piping 19, 51 connected to the expansion valve and filled with a substantially liquid refrigerant, a variety of devices as well as the filter 35, 57 are provided. Accordingly, a plurality of resonance modes with the valve chamber 14 area serving as an antinode of each resonance mode may sometimes be formed. For example, when the large diameter filter 35 and a liquid receiver (not shown) are connected in series to the piping 19 in the first embodiment, a resonance space with the valve chamber 14 serving as the closed end and the filter 35 serving as the open end, and a resonance space with the valve chamber 14 serving as the closed end and the liquid receiver serving as the open end may sometimes be formed. In such a case, for example, two openings 30 are provided on the same horizontal plane, at respective positions inclined forty-five degrees relative to the axis of the piping connection portion 11, on walls of the valve chamber 14. To the two openings 30, resonance adjusters 31 matched with resonance characteristics of the two resonance spaces are attached, respectively. This configuration allows the two resonance adjusters 31 to lower a resonance level of resonance amplitude in respective resonance spaces individually to reduce noise.
(3) In each of the foregoing embodiments, expansion valves are described. These expansion valves may be used in all sorts of refrigerating devices such as household air conditioners, industrial air conditioners for stores, office buildings, refrigerators and freezers, and noise of the expansion valves in these apparatuses can be reduced.

## Claims

1. An expansion valve comprising: a valve body; a restricting portion formed inside the valve body; two piping connection portions communicating with the upstream side and the downstream side of the restricting portion; and at least one opening that opens a refrigerant flow passage to the outside the of valve body, the refrigerant flow passage extending from the piping connection portions to which piping filled with a substantially liquid refrigerant is connected to the restricting portion, the expansion valve being **characterized in that** the valve body is formed in such a manner that a resonance adjuster having a resonance space and adjusting resonance characteristics of the piping filled with a substantially liquid refrigerant is attachable to the outside of the valve body so as to communicate with the opening.

2. The expansion valve according to claim 1, **characterized in that** the resonance adjuster is attached to the outside of the valve body so as to communicate with the opening.

3. The expansion valve according to claim 1, **characterized in that** a plurality of openings are provided, and a plurality of resonance adjusters are attached to the outside of the valve body so as to communicate with the openings.

4. The expansion valve according to any one of claims 1 to 3, **characterized in that** the resonance adjuster is composed of a tubular container.

5. The expansion valve according to any one of claims 1 to 3, **characterized in that** the resonance adjuster has an enclosed space and a communication path communicating with the space.

6. The expansion valve according to any one of claims 1 to 5, **characterized in that** a member that hardly reflects sound waves is attached inside the resonance adjuster.

7. The expansion valve according to claim 6, **characterized in that** the member that hardly reflects sound waves is composed of a porous material.

8. An air conditioner **characterized by** including the expansion valve according to any one of claims 1 to 7.
